# EUROPÄISCHE PATENTSCHRIFT

(11) **EP 3 689 148 B1**
(45) Veröffentlichungstag und Bekanntmachung des Hinweises auf die Patenterteilung: **09.03.2022**
(21) Anmeldenummer: 19154189.5
(22) Anmeldetag: 29.01.2019
(51) Int. Cl.: A22C 21/00

(54) **HALTEVORRICHTUNG UND VERFAHREN ZUM HALTEN VON EINEM ENTWEIDETEN GEFLÜGELKÖRPER ODER EINEM TEIL DAVON WÄHREND DER VERARBEITUNG IN EINER VORRICHTUNG ZUR VERARBEITUNG VON ENTWEIDETEN GEFLÜGELKÖRPERN ODER TEILEN DAVON**
HOLDING DEVICE AND METHOD FOR HOLDING GUTTED POULTRY CARCASSES OR PARTS THEREOF DURING PROCESSING IN AN APPARATUS FOR THE PROCESSING OF GUTTED POULTRY CARCASSES OR PARTS THEREOF
DISPOSITIF ET PROCÉDÉ PERMETTANT DE MAINTENIR UNE CARCASSE DE VOLAILLE ÉVISCÉRÉE OU UNE PARTIE DE LADITE CARCASSE DE VOLAILLE ÉVISCÉRÉE LORS DU TRAITEMENT DANS UN DISPOSITIF DE TRAITEMENT DES CARCASSES DE VOLAILLES ÉVISCÉRÉES OU DES PARTIES DES DITES CARCASSES DE VOLAILLES ÉVISCÉRÉES

(43) Veröffentlichungstag der Anmeldung: 05.08.2020
(73) Patentinhaber: Nordischer Maschinenbau Rud. Baader GmbH + Co. KG, 23560 Lübeck (DE)
(72) Erfinder: RIGGERT, Lasse, 23554 Lübeck (DE); LANDT, Andreas, 23617 Stockelsdorf (DE); FISCHER, Valentin, 23560 Lübeck (DE)
(74) Vertreter: Stork Bamberger Patentanwälte PartmbB

(56) Entgegenhaltungen:
- EP-A2- 1 541 030
- DE-B3-102006 040 454
- US-A- 5 833 527
- US-B2- 9 173 413

## Beschreibung

Die Erfindung betrifft eine Haltevorrichtung, ausgebildet und eingerichtet zum Halten von einem entweideten Geflügelkörper oder einem Teil davon, insbesondere von einer Brustkappe, während der Verarbeitung in einer Vorrichtung zur Verarbeitung von entweideten Geflügelkörpern oder Teilen davon, umfassend einen Stützkörper, ausgebildet und eingerichtet zum Stützen des Geflügelkörpers oder des Teils davon, einen Befestigungskörper, ausgebildet und eingerichtet zum Halten des Stützkörpers einerseits und zum Befestigen der Haltevorrichtung an einer umlaufend angetriebenen Transporteinheit der Vorrichtung zur Verarbeitung von entweideten Geflügelkörpern oder Teilen davon andererseits, sowie eine Klemmeinrichtung, die zum Fixieren des Geflügelkörpers oder des Teils davon auf dem Stützkörper während der Verarbeitung ausgebildet und eingerichtet ist, wobei die Klemmeinrichtung einen Haken, der zum Eindringen in Weichteile des Geflügelkörpers oder des Teils davon ausgebildet und eingerichtet ist, sowie einen eine Klemmbacke aufweisenden Klemmhebel, der zum Klemmen von Teilen des Geflügelkörpers oder des Teils davon gegen die dem Stützkörper zugewandte Unterseite des Hakens ausgebildet und eingerichtet ist, umfasst, wobei der Haken zur Bildung eines Freiraums für die Aufnahme der zu klemmenden Teile des Geflügelkörpers oder des Teils davon mit seiner Unterseite beabstandet zum Stützkörper angeordnet und der Klemmhebel gegen eine Federkraft aus einer Warteposition in eine Klemmposition und zurück bewegbar ausgebildet ist. Die Erfindung betrifft weiterhin eine Transportvorrichtung, ausgebildet und eingerichtet zum Transportieren von entweideten Geflügelkörpern oder Teilen davon, umfassend eine umlaufend angetriebene Transporteinheit sowie mindestens eine daran befestigte Haltevorrichtung, die zum Halten des entweideten Geflügelkörpers oder des Teils davon während der Verarbeitung in einer Vorrichtung zur Verarbeitung von entweideten Geflügelkörpern oder Teilen davon ausgebildet und eingerichtet ist.

Die Erfindung befasst sich weiterhin mit der Verwendung einer Transportvorrichtung in einer Vorrichtung zur Verarbeitung von entweideten Geflügelkörpern oder Teilen davon.

Die Erfindung ist des Weiteren auf eine Vorrichtung zur Verarbeitung von entweideten Geflügelkörpern oder Teilen davon gerichtet, die mindestens eine Bearbeitungsstation zum Bearbeiten der Geflügelkörper oder Teilen davon sowie eine Transportvorrichtung zum Transportieren der Geflügelkörper oder Teilen davon entlang der oder jeder Bearbeitungsstation umfasst.

Schließlich befasst sich die Erfindung mit einem Verfahren zum Aufsatteln eines entweideten Geflügelkörpers oder eines Teils davon auf eine Haltevorrichtung nach einem oder mehreren der Ansprüche 1 bis 12, umfassend die Schritte, Aufstecken des Geflügelkörpers oder eines Teils davon auf einen Stützkörper der Haltevorrichtung, wobei der Geflügelkörper oder das Teil davon beim Aufstecken mit zu klemmenden Teilen des Geflügelkörpers oder des Teils davon in einen zwischen dem Stützkörper und einem Haken einer Klemmeinrichtung gebildeten Freiraum gebracht wird, während der Haken in Weichteile des Geflügelkörpers oder des Teils davon eindringt, und Bewegen eines Klemmhebels der Klemmeinrichtung aus einer Warteposition in eine Klemmposition, in der eine Klemmbacke des Klemmhebels den Geflügelkörper oder das Teil davon bzw. die zu klemmenden Teile zwischen sich und dem Haken fixiert.

In der Geflügel verarbeitenden Industrie werden entweidete Geflügelkörper oder Teile davon in entsprechenden Vorrichtungen verarbeitet. Für die Verarbeitung sind die Geflügelkörper oder Teile davon mit Bezug auf die jeweiligen Verarbeitungswerkzeuge zu positionieren. Üblicherweise sind mehrere Haltevorrichtungen an einer umlaufend angetriebenen Transporteinheit befestigt, mittels der die Geflügelkörper oder Teile davon einer oder mehreren Bearbeitungsstationen zugeführt bzw. in deren Wirkbereich gebracht werden. Zur Verarbeitung werden die Geflügelkörper oder Teile davon automatisch oder manuell auf die Haltevorrichtung aufgesteckt und fixiert. Dieser Vorgang wird insgesamt auch als Aufsatteln bezeichnet. Für eine qualitativ hochwertige und ausbeuteeffiziente Verarbeitung der Geflügelkörper oder Teilen davon ist ein sicheres und vor allem symmetrisches Aufsatteln der Geflügelkörper oder Teilen davon auf die Haltevorrichtung erforderlich.

Die eingangs beschriebene Haltevorrichtung ist als Transportsattel bekannt und umfasst neben dem Befestigungskörper und der Klemmeinrichtung, die üblicherweise dem Befestigungskörper zugeordnet ist, auch den Stützkörper, der in der Regel lösbar an dem bzw. auf dem Befestigungskörper befestigt ist. Der Haken als Bestandteil der Klemmeinrichtung ist ebenfalls am Befestigungskörper befestigt, üblicherweise feststehend, während der Klemmhebel zum Klemmen insbesondere von Knochenbestandteilen des Geflügelkörpers oder Teilen davon schwenkbar am Befestigungskörper gelagert ist. Das Aufstecken auf den Stützkörper kann durch Schieben und/oder Ziehen erfolgen.

Ganz besonders wichtig ist das symmetrische und sichere Aufsatteln von Brustkappen als ein Teil eines entweideten Geflügelkörpers auf die Haltevorrichtung. Die zu verarbeitenden Brustkappen weisen eine Brustkappenkarkasse auf, die mindestens ein Brustbein, ein Paar V-förmig am Brustbein im Bereich einer Brustplatte angeordnete Rabenbeine sowie zwei das Brustbein abdeckende Brustfilets umfasst. Die Brustplatte ist Bestandteil des Brustbeins, das des Weiteren den so genannten Keelbone umfasst. Die Brustplatte und der Keelbone bilden im Sinne der Erfindung demnach das Brustbein, das im Querschnitt T-förmig ausgebildet ist. Die Brustplatte bildet dabei den kurzen T-Strich, während der Keelbone den langen T-Strich darstellt. Die beiden Rabenbeine verlaufen ausgehend vom Brustbein zur Bildung der V-Form sich öffnend nach außen. Bei der Verarbeitung von Brustkappen, z.B. bei der Gewinnung der Brustfilets von der Brustkappenkarkasse bzw. beim Freischneiden des Brustbeins, ist die sichere und symmetrische Aufsattelung der Brustkappen auf dem Stützkörper von besonderer Bedeutung, da die Messer, vorzugsweise zwei beabstandet zueinander angeordnete Kreismesser, die das Brustbein freischneiden, keinerlei Führung durch die (Brustkappen-)Karkasse haben.

Bisher werden die Geflügelkörper oder Teile davon, am Beispiel der Gewinnung von Brustfilets von der (Brustkappen-)Karkasse die Brustkappen, von einer Bedienperson in konstruktiv durch den Stützkörper vorbestimmter Aufsteckrichtung auf die vorbeitransportierten Haltevorrichtungen durch eine schiebende und/oder vorzugsweise ziehende Bewegung aufgesteckt. Dazu wird die Brustkappe mit der Halsseite, also die Brustkappenkarkasse mit offener Seite der V-förmig angeordneten Rabenbeine, voraus in Richtung des der Aufsteckrichtung entgegengerichteten Hakens, der zumindest während der Verarbeitung, zu der auch das Aufstecken der Brustkappe auf die Haltevorrichtung zählt, feststehend ist und wie ein Spieß wirkt, bewegt. Dabei dringt der Haken in Weichteile, also in das weiche Fleisch der Brustkappe bzw. Brustfilets ein. Bei einer symmetrischen Aufsattelung der Brustkappe wird die zwischen den Rabenbeinen liegende Brustplatte, die eine knorpelige/knöcherne Verbindung zwischen den beiden Rabenbeinen im Bereich des Brustbeins darstellt, mit einem freien Ende unter den Haken gebracht, so dass die Brustkappe mit dem freien Ende der Brustplatte zwischen dem Stützkörper und dem Haken liegt, der Haken quasi auf das freie Ende der Brustplatte der Brustkappenkarkasse drückt, während das Brustbein mit der (restlichen) Brustplatte auf dem Stützkörper liegt und sich der Keelbone im Wesentlichen senkrecht vom Stützkörper weg erstreckt, so dass die das Brustbein abdeckenden Brustfilets in Richtung der Bearbeitungsstation, beispielsweise der Messer, weisen. In dieser Position ist die Brustkappe noch nicht ausreichend auf dem Stützkörper fixiert.

Anschließend, also zeitlich versetzt nach dem vollständigen Eindringen des Hakens in die Weichteile, wird die Haltevorrichtung mit der noch nicht ausreichend fixierten Brustkappe entlang der umlaufenden Transporteinheit weitertransportiert, wobei die Haltevorrichtung dabei ein Kurvenglied passiert, das dazu führt, dass der Klemmhebel z.B. über ein vom Kurvenglied gesteuertes Betätigungsmittel aus dem Inneren der Haltevorrichtung aus der Warteposition in die Klemmposition bewegt wird, wobei die Klemmbacke des Klemmhebels von innen gegen die Innenseite der Brustkappe drückt, so dass erst dann die Brustkappe mit der Brustplatte zwischen der Klemmbacke des Klemmhebels und dem Haken ausreichend fixiert ist. Aus dem Inneren bedeutet in diesem Zusammenhang, dass der Klemmhebel in der Warteposition zumindest hinsichtlich der Klemmbacke noch durch den Stützkörper verdeckt ist.

Exemplarisch beschreiben die US 9 173 413 B2 und die DE 10 2006 040 454 B3 gattungsgemäße Vorrichtungen und Verfahren.

Die bekannten Haltevorrichtungen weisen zum einen den Nachteil auf, dass der Haken beim Aufstecken der Brustkappen unkontrolliert, also ohne jede Führung in das weiche Fleisch der Brustfilets dringen kann. Das bedeutet, dass die symmetrische Ausrichtung der Brustkappen, die für eine nachfolgende Bearbeitung elementar ist, von der jeweiligen Bedienperson abhängt. Das führt dazu, dass die Brustkappen teilweise schief bzw. unsymmetrisch aufgesattelt werden. Zum anderen besteht die Gefahr, dass sich die Brustkappe während des Transports der Haltevorrichtung von der Position, in der die Brustkappe aufgesteckt wird, bis zu der Position, in der das Betätigungsmittel den Klemmhebel aus der Warteposition in die Klemmposition bewegt, nicht ausreichend fixiert ist und sich entsprechend aus der durch das Aufstecken vorgegebenen Position/Lage verschieben kann. Das führt in der Praxis dazu, dass die beiden beabstandet zueinander angeordneten Messer zum Trennen der Brustfilets vom Brustbein bzw. beim Freischneiden des Brustbeins bei unsymmetrischer Lage auf einer Seite neben dem Brustbein in das Fleisch einschneiden, das Brustbein also nicht wie erforderlich und gewünscht in ihre Mitte nehmen. Ein weiterer Nachteil besteht darin, dass die Betätigung des Klemmhebels aus der Warteposition in die Klemmposition und zurück einen komplexen und Bauraum einnehmenden Mechanismus z.B. mit einem Kurvenglied und einem Betätigungsmittel erfordert.

Der Erfindung liegt somit die Aufgabe zugrunde, eine konstruktiv einfache und bezüglich der symmetrischen Aufsattelung von Brustkappen verbesserte Haltevorrichtung zu schaffen. Eine weitere Aufgabe der Erfindung liegt darin, eine entsprechende Transportvorrichtung und Vorrichtung zur Verarbeitung von entweideten Geflügelkörpern oder Teilen davon zur Verfügung zu stellen. Die Aufgabe besteht weiterhin darin, ein einfaches und zuverlässiges Verfahren zum sicheren und symmetrischen Aufsatteln der Brustkappen auf die Haltevorrichtungen vorzuschlagen.

Diese Aufgabe wird durch eine Haltevorrichtung der eingangs genannten Art dadurch gelöst, dass der Klemmhebel zusätzlich zur Klemmbacke eine Zentrierflanke aufweist, die in der Warteposition des Klemmhebels in den Freiraum zwischen der Unterseite des Hakens und dem Stützkörper hineinragt. Das bedeutet, dass die Zentrierflanke beim Aufstecken der Brustkappe auf die Stützvorrichtung "der Brustkappe im Weg steht", so dass die Brustkappe beim Aufstecken zwingend auch gegen die Zentrierflanke stößt. Genauer steht die Zentrierflanke in der Warteposition des Klemmhebels über den Stützkörper hervor, so dass die Zentrierflanke den zwischen Haken und Stützkörper bestehenden Freiraum in Aufsteckrichtung gesehen mindestens teilweise abdeckt bzw. verdeckt. Damit nutzt die Erfindung die knorpelige/knöcherne Verbindung der V-förmig angeordneten Rabenbeine der Brustkappe zur Zentrierung. Die V-förmige Anordnung der Rabenbeine wird dazu verwendet, um die Brustkappe mittig und symmetrisch auf den Stützkörper zu führen. Die knorpelige/knöcherne Verbindung, die ja die Brustplatte bildet, trifft beim Aufstecken dann mittig auf die Zentrierflanke und nimmt diese mit. Dadurch wird eine Zentrierung der Brustkappe auf dem Stützkörper vorgenommen, indem die Rabenbeine mit ihren einander gegenüberliegenden Innenseiten der Rabenbeine die Zentrierflanke in ihre Mitte nehmen, bis die die sich im Verbindungsbereich der beiden Rabenbein befindet, gegen die Zentrierflanke stößt und diese bei einer fortgesetzten Aufsteckbewegung mitnimmt. Anders ausgedrückt bewegt die Bedienperson durch das Aufstecken und den dabei entstehenden Kontakt der Brustkappenkarkasse mit der Zentrierflanke diese als Bestandteil des Klemmhebels aus ihrer Warteposition, so dass mit der Zentrierung zeitgleich bereits die Verriegelung bzw. Fixierung der Brustplatte vorgenommen wird, da durch das Mitnehmen der Zentrierflanke durch die Brustkappenkarkasse auch die Klemmbacke des Klemmhebel aus der Warteposition in die Klemmposition bewegt wird. Die Aufsteckbewegung löst demnach sowohl einen Zentriervorgang für die Brustkappe als auch den Verriegelungsvorgang der Brustkappe auf dem Stützkörper aus. Im Ergebnis wird eine symmetrische Aufsattelung der Brustkappe auf die Haltevorrichtung bei geringen Anforderungen an die Bedienperson erreicht. Des Weiteren kann dadurch ein verkürzter Bauraum erreicht werden.

Eine besonders bevorzugte Weiterbildung der Erfindung ist dadurch gekennzeichnet, dass die Haltevorrichtung für eine Aufsteckrichtung T des Geflügelkörpers oder des Teils davon auf den Stützkörper ausgebildet und eingerichtet ist, die sich parallel zur Symmetrieebene E des Stützkörpers erstreckt und einem freien Ende des Hakens entgegengerichtet ist. Damit ist eine Art ziehende Aufsteckbewegung in Richtung des Hakens für eine symmetrische Aufsattelung gewährleistet.

Vorteilhafterweise erstreckt sich die Zentrierflanke in der Warteposition des Klemmhebels bis in den Bereich nahe der dem Stützkörper zugewandten Unterseite des Hakens. Das bedeutet, dass die Zentrierflanke im Wesentlichen senkrecht zur Aufsteckrichtung so weit aus dem Stützkörper herausragt, dass sie nahezu an die Unterseite des Hakens heranreicht, wobei der Abstand zwischen dem freien Ende der Zentrierflanke und dem Haken einerseits so klein wie möglich gewählt ist, um für die Brustkappenkarkasse eine möglichst große Angriffsfläche zu bilden, und der Abstand andererseits groß genug ist, um bei der Schwenkbewegung des Klemmhebels aus der Warteposition eine Berührung oder gar Kollision der Zentrierflanke mit dem Haken zu verhindern.

Eine vorteilhafte Ausführungsform ist dadurch gekennzeichnet, dass sich die Zentrierflanke quer zur Aufsteckrichtung T über einen Teil der Breite des Stützkörpers erstreckt. Auch diese Ausführungsform stellt sicher, dass eine große Angriffsfläche gebildet ist, damit die Zentrierflanke beim Aufstecken der Brustkappe zuverlässig von der Brustkappe getroffen wird.

Zweckmäßigerweise ist die Zentrierflanke quer zur Aufsteckrichtung T breiter ausgebildet als das freie Ende des Hakens. Damit wird neben einer weiteren Vergrößerung der Angriffsfläche erreicht, dass der Haken durch die Zentrierflanke mindestens teilweise abgedeckt wird, so dass die Brustkappe oder Teile davon beim Aufstecken erst mit der Zentrierflanke in Kontakt kommen, bevor der Haken vollständig in das weiche Fleisch der Brustkappe eindringen kann.

Eine bevorzugte Weiterbildung ist dadurch gekennzeichnet, dass sich die Zentrierflanke in der Warteposition des Klemmhebels in Aufsteckrichtung T des Geflügelkörper oder des Teils davon auf den Stützkörper mindestens auf gleicher Höhe zum freien Ende des Hakens, vorzugsweise jedoch vor dem freien Ende des Hakens befindet. Damit werden die zuvor beschriebenen Vorteile noch weiter verstärkt. Der Haken kommt durch diese Ausbildung räumlich und zeitlich nach der Zentrierflanke mit der Brustkappe in Kontakt, so dass erst eine Vorzentrierung erfolgt, bevor der Haken in das Fleisch eindringt. Da der Klemmhebel gegen eine Federkraft aus der Warteposition in die Klemmposition schwenkbar ist, bedarf es zum Schwenken einer gewissen Kraft, um die Federkraft zu überwinden. Der Kontakt zwischen dem Klemmhebel und genauer der Zentrierflanke einerseits und der Brustkappe andererseits entsteht beim Aufsatteln der Brustkappe durch die Bedienperson im Bereich der Brustplatte zwischen den Rabenbeinen. Dieser Bereich ist im Gegensatz zum Fleisch der Brustfilets fest und eignet sich entsprechend für die Zentrierung. Erst wenn die Brustkappe von der Bedienperson mit Druck auf diese Kontaktstelle in eine zentrische Position gebracht wird, beginnt sich der Klemmhebel zu bewegen und gibt den Haken frei, so dass dieser in das Fleisch einstechen kann. Entsprechend ist dem Klemmhebel eine Doppelfunktion zugeordnet, die durch die Bedienperson beim Aufstecken ausgelöst wird.

Vorzugsweise befindet sich die Klemmbacke des Klemmhebels in der Warteposition des Klemmhebels in einer zurückgezogenen Position innerhalb des Stützkörpers und die Zentrierflanke des Klemmhebels ragt in der Warteposition des Klemmhebels über den Stützkörper hinaus, während die Klemmbacke des Klemmhebels in der Klemmposition des Klemmhebels über den Stützkörper hinausragt und sich die Zentrierflanke des Klemmhebels in der Klemmposition des Klemmhebels in einer zurückgezogenen Position innerhalb des Stützkörpers befindet. Durch diese Ausbildung/Anordnung ist zunächst das Zentrieren und anschließend das Fixieren auf zuverlässige Weise gewährleistet. Der Stützkörper ist üblicherweise auf den Befestigungskörper aufgesteckt und deckt die Klemmeinrichtung in der Warteposition ab, so dass nur die Zentrierflanke aus dem Stützkörper heraus in den Freiraum zwischen Stützkörper und Haken ragt. Damit ist die Haltevorrichtung zunächst auf die Zentrierung eingerichtet. In der Klemmposition taucht die Zentrierflanke in den Stützkörper ein und gibt so den Freiraum frei, so dass die Klemmbacke durch die Schwenkbewegung in den Freiraum gelangt und die Brustkappe von innen gegen den Haken drückt. Damit ist die Haltevorrichtung dann auf die Fixierung eingerichtet.

Optional ist die Zentrierflanke einstückig mit dem Klemmhebel verbunden, wobei der Klemmhebel über die Zentrierflanke produktgesteuert aus der Warteposition in die Klemmposition bewegbar ist. Durch diese Ausbildung, nämlich das Zentrieren und Fixieren per Hand, ausgelöst durch eine fließende Bewegung der Bedienperson beim Aufsatteln der Brustkappe, ausgeführt durch den Kontakt der Brustkappe zum Klemmhebel, daher produktgesteuert, kann auf einen komplexen Mechanismus zum Verriegeln verzichtet werden. Vielmehr werden das Zentrieren und Fixieren in einer fließenden Bewegung an einer Position der Haltevorrichtung ausgeführt.

Vorteilhafterweise bildet die Zentrierflanke das freie Ende des Klemmhebels, derart, dass die Zentrierflanke bei der Bewegung des Klemmhebels aus der Warteposition in die Klemmposition der Klemmbacke in einem festen Abstand vorauslaufend ist. Dadurch ist ein definierter und zeitlich abgestimmter Ablauf der Doppelfunktion Zentrieren und Fixieren auf einfache Weise sichergestellt.

Eine bevorzugte Weiterbildung ist dadurch gekennzeichnet, dass die Zentrierflanke das freie Ende des Hakens mindestens in der Warteposition des Klemmhebels frontal, nämlich in Aufsteckrichtung T, oder seitlich, nämlich parallel zur Aufsteckrichtung T, mindestens teilweise abdeckt. Mit frontaler Abdeckung ist beschrieben, dass die Zentrierflanke in Aufsteckrichtung nicht nur vor dem Haken positioniert ist, sondern auch über den Haken hinaus aus dem Stützkörper herausragt, so dass dieser mindestens teilweise, vorzugsweise jedoch vollständig von der Zentrierflanke verdeckt ist. Dadurch wird jede Art des Kontakts der Brustkappe mit dem Haken solange verhindert, bis durch die Zentrierflanke eine Zentrierung der Brustkappe erfolgt ist. Eine entsprechende Wirkung wird mit der seitlichen Abdeckung erzielt. Mit seitlicher Abdeckung ist beschrieben, dass die Zentrierflanke in Aufsteckrichtung nicht nur vor dem Haken positioniert ist, sondern den Haken mindestens einseitig, vorzugsweise jedoch beidseitig flankiert. Vorzugsweise ist ein Teil der Zentrierflanke in Aufsteckrichtung betrachtet links vom Haken und ein anderer Teil rechts vom Haken positioniert.

Besonders vorteilhaft ist die Zentrierflanke in Aufsteckrichtung T betrachtet U-förmig ausgebildet, derart, dass der Haken mindestens in der Warteposition des Klemmhebels zwischen den beiden Schenkeln der U-förmigen Zentrierflanke steht oder bei der Bewegung des Klemmhebels aus der Warteposition in die Klemmposition in die Zentrierflanke eintauchen bzw. durch die Zentrierflanke durchtauchen kann. Mit dieser Ausführungsform werden die zuvor beschriebenen Vorteile weiter verstärkt.

Vorzugsweise ist der Klemmhebel mit einem in der Klemmposition selbsthemmenden Verriegelungsmechanismus verbunden. Damit ist eine sichere Fixierung gewährleistet, die sich nur von außerhalb wieder öffnen lässt.

Die Aufgabe wird auch durch eine Transportvorrichtung der eingangs genannten Art dadurch gelöst, dass die oder jede Haltevorrichtung nach einem oder mehreren der Ansprüche 1 bis 12 ausgebildet und eingerichtet ist.

Die Aufgabe wird weiterhin dadurch gelöst, dass bei der Verwendung einer Transportvorrichtung in einer Vorrichtung zur Verarbeitung von Geflügelkörpern oder Teilen davon eine Transportvorrichtung nach Anspruch 13 eingesetzt wird.

Die Aufgabe wird auch durch eine Vorrichtung zur Verarbeitung von entweideten Geflügelkörpern oder Teilen davon der eingangs genannten Art dadurch gelöst, dass die Transportvorrichtung nach Anspruch 13 ausgebildet und eingerichtet ist.

Die Aufgabe wird weiterhin durch ein Verfahren mit den eingangs genannten Schritten dadurch gelöst, dass der Geflügelkörper oder das Teil davon mittels einer Zentrierflanke des Klemmhebels auf dem Stützkörper zentriert wird, bevor der Haken in die Weichteile eindringt, indem Rabenbeine mit ihren einander zugekehrten Innenseiten die Zentrierflanke in ihre Mitte nehmen, bis eine die sich im Verbindungsbereich der beiden Rabenbeine befindet, gegen die Zentrierplatte stößt und diese bei einer fortgesetzten Aufsteckbewegung mitnimmt. Mit anderen Worten wird die Brustkappe erst zentriert, um dann unmittelbar nachfolgend die Brustkappe zu fixieren, wobei das Fixieren durch das vollständige Eindringen des Hakens einerseits und das nahezu zeitgleiche Bewegen der Klemmbacke in die Klemmposition andererseits erfolgt.

Vorzugsweise ist das Verfahren zum Aufsatteln von Brustkappen als Teil des Geflügelkörpers ausgebildet und eingerichtet, wobei die Brustkappe beim Aufstecken in Aufsteckrichtung T auf den Stützkörper zunächst mit Knochenbestandteilen auf die Zentrierflanke trifft und dadurch zentriert wird, und beim fortgesetzten Aufstecken der Haken vollständig in die Weichteile dringt und parallel der Klemmhebel aus der Warteposition in die Klemmposition zum Fixieren der Brustkappe geschwenkt wird. Damit ist das Zentrieren zeitlich vorgelagert, während das Eindringen des Hakens in die Weichteile und das Klemmen der Knochenbestandteile zwischen der Klemmbacke und dem Haken zum Fixieren der Brustkappe nahezu zeitgleich und dem Zentrieren unmittelbar folgend ausgeführt wird. Letztlich wird eine fließende Aufsteckbewegung ausgeführt, bei der zunächst die zwischen den beiden Rabenbeinen und im Bereich des Brustbeins befindliche Brustplatte gegen die Zentrierflanke stößt und dabei die Brustkappe zentriert, und die Brustkappe dann weiter in Aufsteckrichtung bewegt wird, so dass die Brustplatte den Klemmhebel mittels der Zentrierflanke aus der Warteposition in die Klemmposition bewegt, so dass nahezu zeitgleich die Brustplatte in den Freiraum zwischen Haken und Stützkörper bewegt wird, während der Haken vollständig in die Weichteile eindringt und die Klemmbacke in die Klemmposition bewegt wird. Währenddessen macht die Zentrierflanke durch die Schwenkbewegung des Klemmhebels in die Klemmposition den Freiraum frei.

Vorteilhafterweise wird der Klemmhebel ausschließlich produktgesteuert aus der Warteposition in die Klemmposition geschwenkt, wobei das Schwenken des Klemmhebels aus der Warteposition erst dann durch die Brustkappe ausgelöst wird, nachdem die Brustkappe durch einen Kontakt von Knochenbestandteilen mit der Zentrierflanke in eine symmetrische Position gebracht wurde.

Die sich aus der erfindungsgemäßen Transportvorrichtung, der Verwendung derselben, der Vorrichtung zur Verarbeitung von entweideten Geflügelkörpern oder Teilen davon sowie dem Verfahren zum Aufsatteln von Geflügelkörpern oder Teilen davon auf Haltevorrichtungen ergebenden Vorteile wurden bereits ausführlich im Zusammenhang mit der Haltevorrichtung beschrieben, weshalb zur Vermeidung von Wiederholungen auf die entsprechenden Passagen verwiesen wird.

Weitere zweckmäßige und/oder vorteilhafte Merkmale und Weiterbildungen der Haltevorrichtung, der Transortvorrichtung, der Verwendung, der Vorrichtung zur Verarbeitung von entweideten Geflügelkörpern oder Teilen davon sowie dem Verfahren ergeben sich aus den Unteransprüchen und der Beschreibung. Besonders bevorzugte Ausführungsformen der Erfindung werden anhand der beigefügten Zeichnung näher erläutert. In der Zeichnung zeigt:

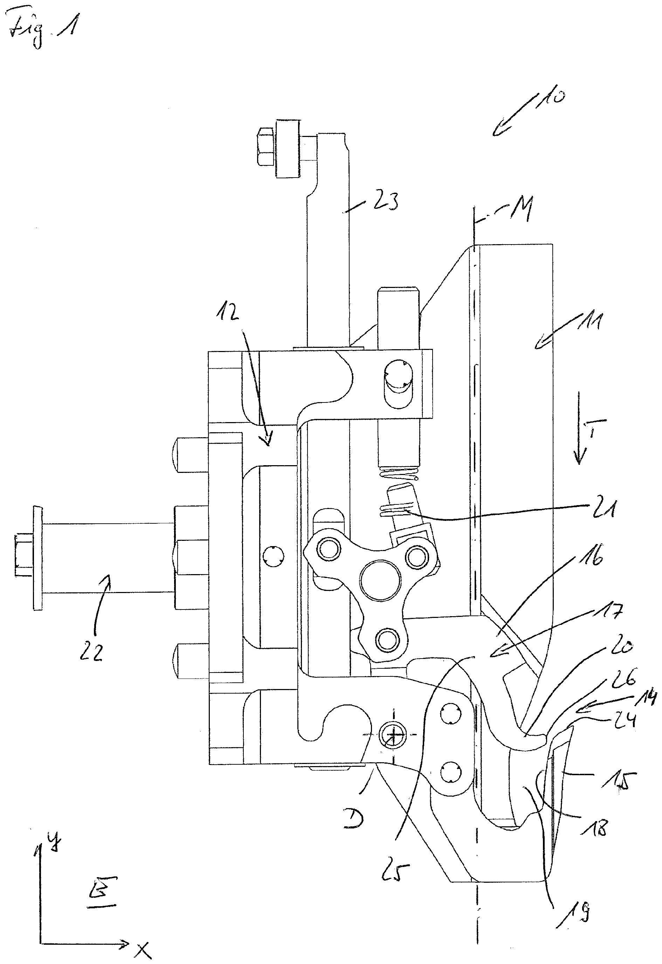

- Fig. 1: eine schematische Darstellung einer Haltevorrichtung in Seitenansicht, wobei der (aus Gründen der besseren Übersicht teilweise transparent dargestellte) Stützkörper mit dem die Klemmeinrichtung aufweisenden Befestigungskörper verbunden ist und der Befestigungskörper mit einer Transporteinheit verbindbar ist, und der Klemmhebel in einer ersten Ausführungsform eine Klemmbacke und eine Zentrierflanke umfasst, die in der dargestellten Warteposition des Klemmhebels in den Freiraum zwischen der Unterseite des Hakens und dem Stützkörper hineinragt und in Aufsteckrichtung T etwa auf gleicher Höhe steht wie das freie Ende des Hakens,
- Fig. 2: einen vergrößerten Ausschnitt einer Haltevorrichtung gemäß Figur 1 mit einer weiteren Ausführungsform eines Klemmhebels, bei dem die Zentrierflanke in der Warteposition in Aufsteckrichtung T vor dem freien Ende des Hakens steht,
- Fig. 3: einen Ausschnitt des Klemmhebels in einer weiteren Ausführungsform, bei der der Haken in der Warteposition des Klemmhebels zwischen der Zentrierflanke angeordnet ist,
- Fig. 4: die Ausführungsform gemäß Figur 3 im Schnitt IV-IV,
- Fig. 5: einen Ausschnitt einer umlaufend angetriebenen Transporteinheit mit einer Mehrzahl von Haltevorrichtungen gemäß den Figuren 1 bis 4,

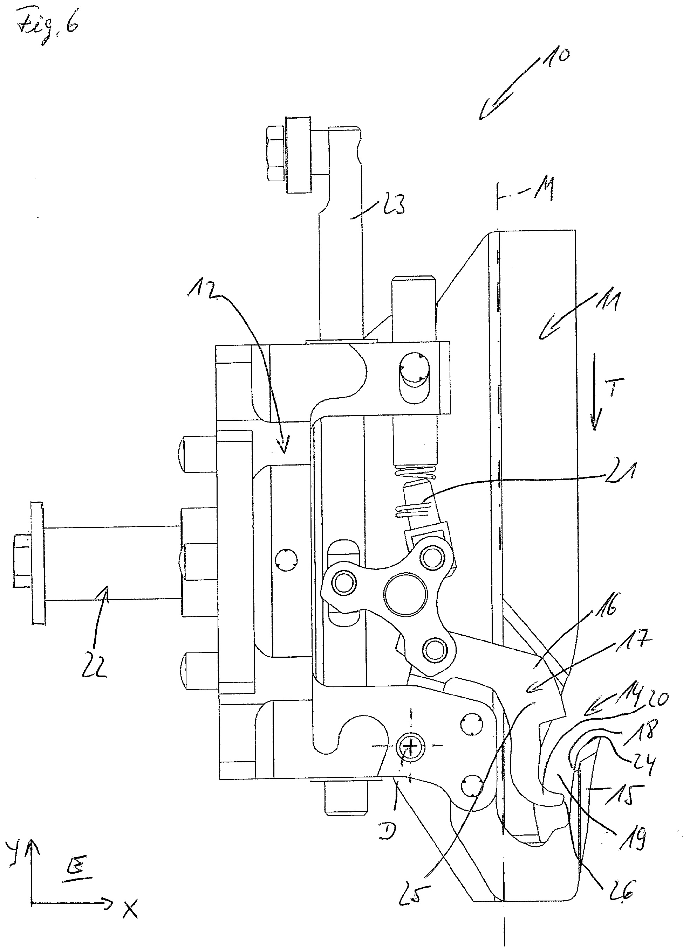

- Fig. 6: die Haltevorrichtung gemäß Fig. 1, wobei sich der Klemmhebel in einer Zwischenposition befindet, und
- Fig. 7: die Haltevorrichtung gemäß Figur 1, wobei sich der Klemmhebel in der Klemmposition befindet.

Die in der Zeichnung dargestellte Haltevorrichtung dient zum Halten von Brustkappen von entweideten Geflügelkörpern. Die zu verarbeitenden Brustkappen umfassen Teile der Karkasse, nämlich insbesondere das Brustbein, V-förmig am Brustbein im Bereich einer Brustplatte angeordnete Rabenbeine sowie zwei noch an der Karkasse befindliche Brustfilets. Die erfindungsgemäße Haltevorrichtung ist jedoch in gleicher Weise zum Halten von anderen entweideten Geflügelkörpern oder Teilen davon ausgebildet und eingerichtet.

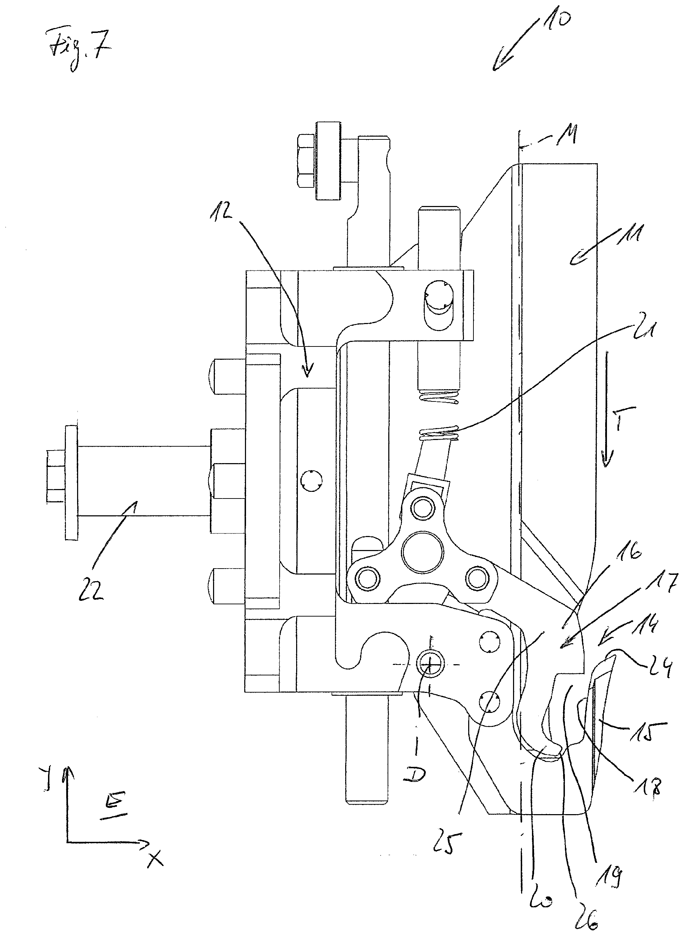

Die dargestellte Haltevorrichtung 10 ist zum Halten von einem entweideten Geflügelkörper oder einem Teil davon, insbesondere von einer Brustkappe, während der Verarbeitung in einer Vorrichtung zur Verarbeitung von entweideten Geflügelkörpern oder Teilen davon ausgebildet und eingerichtet. Die Haltevorrichtung 10 umfasst einen Stützkörper 11, ausgebildet und eingerichtet zum Stützen des Geflügelkörpers oder des Teils davon, einen Befestigungskörper 12, ausgebildet und eingerichtet zum Halten des Stützkörpers 11 einerseits und zum Befestigen der Haltevorrichtung 10 an einer umlaufend angetriebenen Transporteinheit 13 der Vorrichtung zur Verarbeitung von entweideten Geflügelkörpern oder Teilen davon andererseits, sowie eine Klemmeinrichtung 14, die zum Fixieren des Geflügelkörpers oder des Teils davon auf dem Stützkörper 11 während der Verarbeitung ausgebildet und eingerichtet ist, wobei die Klemmeinrichtung 14 einen Haken 15, der zum Eindringen in Weichteile des Geflügelkörpers oder des Teils davon ausgebildet und eingerichtet ist, sowie einen eine Klemmbacke 16 aufweisenden Klemmhebel 17, der zum Klemmen von Teilen des Geflügelkörpers oder des Teils davon gegen die dem Stützkörper 11 zugewandte Unterseite 18 des Hakens 15 ausgebildet und eingerichtet ist, umfasst, wobei der Haken 15 zur Bildung eines Freiraums 19 für die Aufnahme der zu klemmenden Teile (insbesondere fester Knorpel- oder Knochenbestandteile) des Geflügelkörpers oder des Teils davon mit seiner Unterseite 18 beabstandet zum Stützkörper 11 angeordnet und der Klemmhebel 17 aus einer Warteposition (siehe Figur 1) in eine Klemmposition (siehe Figur 7) und zurück bewegbar ausgebildet ist.

Diese Haltevorrichtung 10 zeichnet sich erfindungsgemäß dadurch aus, dass der Klemmhebel 17 zusätzlich zur Klemmbacke 16 eine Zentrierflanke 20 aufweist, die in der Warteposition des Klemmhebels 17 in den Freiraum 19 zwischen der Unterseite 18 des Hakens 15 und dem Stützkörper 11 hineinragt. Mit dem Freiraum 19 ist nicht nur der unmittelbar unterhalb der Unterseite 18 des Hakens 15 befindliche Raum gemeint, sondern ausdrücklich auch der Raum, der in Aufsteckrichtung T vor dem Haken 15 und unterhalb einer gedachten Verlängerung des Hakens 15 liegt.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig die weiter oben beschriebene Haltevorrichtung 10 weiterbilden können.

Der Stützkörper 11 kann optional mit Schrauben oder dergleichen als Befestigungsmittel, die von außen zugänglich sind, lösbar mit dem Befestigungskörper 12 verbunden sein. Dazu ist der Stützkörper 11 haubenartig von oben auf den Befestigungskörper 12 aufgesteckt und mit dem Befestigungsmittel fixiert. Der Stützkörper 11 und der Befestigungskörper 12 definieren eine Mittelebene E (siehe insbesondere Figur 1, E aufgespannt zwischen x- und y-Achse), die parallel zur Mittelachse M (siehe insbesondere Figur 1) der Haltevorrichtung 10 verläuft. Bevorzugt ist der Stützkörper 11 mittels eines von außen zugänglichen Schnellverschlusssystems als Befestigungsmittel mit dem Befestigungskörper 12 verbunden. Das Schnellverschlusssystem kann einen Spann- und/oder Klemm- und/oder Rastmechanismus oder dergleichen umfassen.

Die aus Befestigungskörper 12 und Klemmeinrichtung 14 gebildete Einheit ist bevorzugt aus Metall, vorzugsweise aus Edelstahl hergestellt. Andere Materialien oder Materialkombinationen sind aber ebenfalls einsetzbar. Die Klemmeinrichtung 14 ist Bestandteil des Befestigungskörpers 12 und mit diesem verbunden bzw. an diesem angeordnet. Dazu ist der Haken 15 zumindest in montiertem Zustand der Haltevorrichtung 10, also mit aufgesetztem und fixiertem Stützkörper 11 auf dem Befestigungskörper 12, vorzugweise ortsfest mit dem Befestigungskörper 12 verbunden, so dass der Haken 15 einen starren Spieß, Dorn oder dergleichen bildet. Der Klemmhebel 17 ist schwenkbar um eine Schwenkachse D am Befestigungskörper 12 gelagert. Der schwenkbare Klemmhebel 17, der aus einer Warteposition in eine Klemmposition und zurück schwenkbar ist, ist mittels einer Feder 21 in der Warteposition vorgespannt gehalten. Dadurch ist der Klemmhebel 17 nur gegen einen Widerstand aus der Warteposition in die Klemmposition bewegbar. Das bedeutet, dass der Klemmhebel 17 erst bei Beaufschlagung der Zentrierflanke 20 mit einer gewissen Kraft aus der Warteposition in die Klemmposition schwenkbar ist. Anstelle der Feder 21 kann auch jedes andere bekannte Element, mit dem ein Widerstand aufgebracht werden kann, z.B. ein Pneumatikzylinder oder dergleichen, eingesetzt werden. Die Federkraft der Feder 21 ist vorzugsweise einstellbar ausgebildet. Optional ist die Feder 21 auch austauschbar ausgebildet und angeordnet, um Federn 21 mit unterschiedlichen Federkräften einsetzen zu können.

Der Stützkörper 11 ist bevorzugt einteilig ausgebildet und aus Kunststoff hergestellt. Weiter bevorzugt wird der Stützkörper 11 im Spritzgussverfahren, durch Fräsen aus dem Vollen oder mittels 3D-Druck hergestellt. Optional kann der Stützkörper 11 auch aus anderen Materialien bestehen und auch mit anderen Herstellungsverfahren hergestellt sein. Die Haltevorrichtung 10 weist ein Befestigungsmittel 22 auf, mit dem die Haltevorrichtung 10 vorzugweise lösbar mit der Transporteinheit 13 verbunden werden kann. Des Weiteren kann die Haltevorrichtung 10 ein Betätigungsmittel 23 aufweisen, mittels dem der Klemmhebel 17 im Zusammenwirken zum Beispiel mit einem Kurvenglied zumindest aus der Klemmposition zurück in die Warteposition bewegbar ist. Optional kann auch mittels eines weiteren Kurvenglieds die von Hand ausgelöste Klemmwirkung über das Betätigungsmittel 23 unterstützt werden, indem der Klemmhebel 17 über das weitere Kurvenglied weiter in Klemmposition geschwenkt wird. Vorzugsweise sind Befestigungsmittel 22 und Betätigungsmittel 23 dem Befestigungskörper 12 zugeordnet bzw. mit diesem verbunden.

Aus der Zeichnung wird deutlich, dass die Haltevorrichtung 10 für eine Aufsteckrichtung T des Geflügelkörpers oder eines Teils davon auf den Stützkörper 11 ausgebildet und eingerichtet ist, die sich parallel zur Symmetrieebene E, aufgespannt durch die X- und Y-Achse, des Stützkörpers 11 erstreckt und einem freien Ende 24 des Hakens 15 entgegengerichtet ist. Mit Bezug auf die Figur 1 bedeutet das, dass eine Bedienperson z.B. eine Brustkappe, mit den V-förmig auseinandergehenden Rabenbeinen voran, in Aufsteckrichtung T von oben nach unten auf den Stützkörper 11 schiebt und/oder zieht, wobei eine ziehende Bewegung bevorzugt ist.

In der Ausführungsform gemäß Figur 1 erstreckt sich die Zentrierflanke 20 in der Warteposition des Klemmhebels 17 bis in den Bereich nahe der dem Stützkörper 11 zugewandten Unterseite 18 des Hakens 15. In der Ansicht gemäß Figur 1 deckt die Zentrierflanke 20 den Freiraum 19 in Aufsteckrichtung T zumindest in der Höhe, also ausgehend vom Stützkörper 11 in Richtung des Hakens 15, nahezu vollständig ab. Das bedeutet, dass die Brustkappe (oder jedes andere Geflügelkörperteil) beim Aufstecken auf den Stützkörper 11 in Aufsteckrichtung T zwangsläufig auf die Zentrierflanke 20 trifft und erst die Brustplatte zwischen den Rabenbeinen ausreichend fest und stabil ist, um die Kraft für das Schwenken des Klemmhebels 17 aufzubringen. Mit anderen Worten bleibt die Zentrierflanke 20 solange in ihrer Ausgangsposition, nämlich der Warteposition, bis die Brustkappe mittels der Zentrierflanke 20 zwischen den Rabenbeinen im Bereich der Brustplatte zentriert ist. Erst durch das fortgesetzte Aufstecken der Brustkappe über den Kontaktpunkt der Brustplatte mit der Zentrierflanke 20 hinaus wird der Klemmhebel 17 aus der Warteposition in die Klemmposition geschwenkt und gibt dabei das freie Ende 24 des Hakens 15 frei, das dann in das weiche Fleisch des Brustfilets eindringen kann.

Die Zentrierflanke 20 erstreckt sich quer zur Aufsteckrichtung T (in die Blattebene hinein) über einen Teil der Breite des Stützkörpers 11. Der Stützkörper 11 ist entsprechend breit ausgespart, derart, dass die Zentrierflanke 20 beim Schwenken in die Klemmposition in den Stützkörper 11 eintauchen kann. In der Breite kann die Zentrierflanke 20 genauso breit ausgebildet sein wie das freie Ende 24 des Hakens 15. Bevorzugt ist die Zentrierflanke 20 quer zur Aufsteckrichtung T breiter ausgebildet als das freie Ende 24 des Hakens 15.

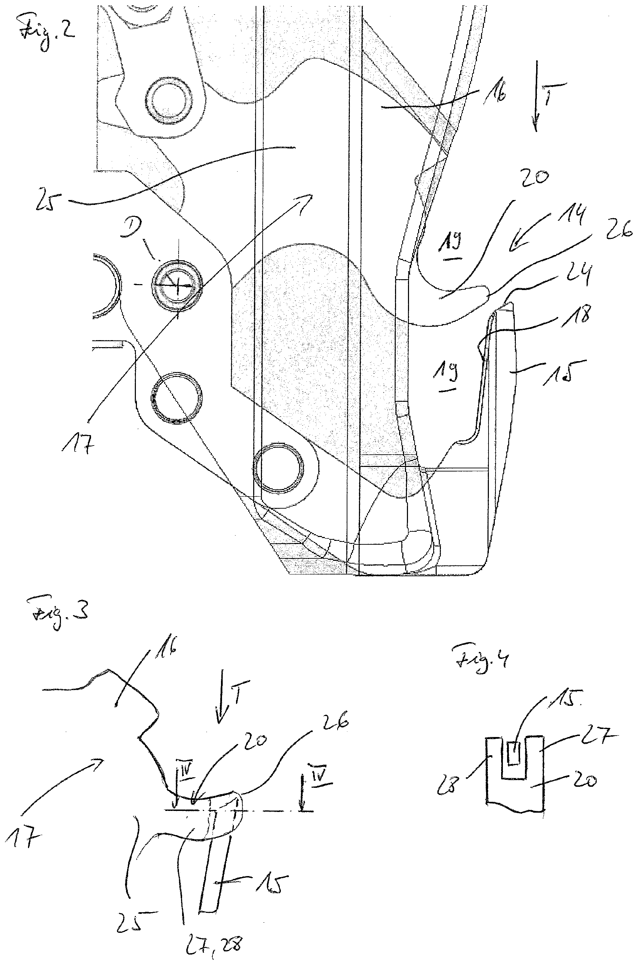

Besonders bevorzugt befindet sich die Zentrierflanke 20 in der Warteposition des Klemmhebels 17 in Aufsteckrichtung T des Geflügelkörpers oder eines Teils davon auf den Stützkörper 11 mindestens auf gleicher Höhe (siehe z.B. Figur 1) zum freien Ende 24 des Hakens 15, vorzugsweise jedoch vor dem freien Ende 24 des Hakens 15 (siehe z.B. Figur 2). In der Figur 2 ist eine Ausführungsform dargestellt, bei der die Brustkappe beim Aufstecken in Aufsteckrichtung räumlich und zeitlich vordem Haken 15 auf die Zentrierflanke 20 trifft. Die Zentrierflanke 20 kann bevorzugt eine Hakenform aufweisen, um die Brustplatte zwischen den Rabenbeinen zuverlässig "einfangen" zu können. Die Zentrierflanke 20 kann aber auch andere Formen und Dimensionen in Höhe (mit größerem oder kleinerem Überstand gegenüber dem Stützkörper 11 als dargestellt) und Breite (in die Blattebene hinein) aufweisen.

In allen Ausführungsformen befindet sich vorzugsweise die Klemmbacke 16 des Klemmhebels 17 in der Warteposition des Klemmhebels 17 in einer zurückgezogenen Position innerhalb des Stützkörpers 11, und die Zentrierflanke 20 des Klemmhebels 17 ragt in der Warteposition des Klemmhebels 17 über den Stützkörper 11 hinaus, während die Klemmbacke 16 des Klemmhebels 17 in der Klemmposition des Klemmhebels 17 über den Stützkörper 11 hinausragt, und sich die Zentrierflanke 20 des Klemmhebels 17 in der Klemmposition des Klemmhebels 17 in einer zurückgezogenen Position innerhalb des Stützkörpers 11 befindet. Die Position von Klemmbacke 16 einerseits und Zentrierflanke 20 andererseits hängt entsprechend von der jeweiligen Funktionalität des Klemmhebels 17 ab. Zum Zentrieren befindet sich die Zentrierflanke 20 im Wirkbereich der aufzusteckenden Brustkappe. Damit stößt die Brustkappe zwangsläufig gegen die Zentrierflanke 20. Zum Fixieren befindet sich die Klemmbacke 16 im Wirkbereich der Brustkappe. Dadurch, dass sowohl die Klemmbacke 16 als auch die Zentrierflanke 20 Bestandteil des Klemmhebels 17 sind, ist eine zeitlich abgestimmte und koordinierte Bewegung des Klemmhebels 17 zwischen den beiden Funktionalitäten gewährleistet.

Der Klemmhebel 17 kann aus mehreren Komponenten zusammengestellt sein. Anders ausgedrückt können Klemmbacke 16 und/oder Zentrierflanke 20 als Einzelteile mit einem Grundkörper 25 des Klemmhebels 17 verbunden sein. Vorzugsweise ist die Zentrierflanke 20 einstückig mit dem Grundkörper 25 zur Bildung des Klemmhebels 17 verbunden, ebenso wie die Klemmbacke 16. Entsprechend ist der Klemmhebel 17 einstückig und starr ausgebildet. Der Klemmhebel 17 ist unabhängig von seiner tatsächlichen Ausbildung über die Zentrierflanke 20 produktgesteuert aus der Warteposition in die Klemmposition bewegbar. Optional kann die Schwenkbewegung, ausgelöst durch die Brustkappe bzw. die Bedienperson, die die Brustkappe aufsteckt, ergänzend z.B. durch das Betätigungsmittel 23 über einen Kurventrieb oder dergleichen unterstützt werden, um z.B. die Brustkappe vor einer Bearbeitung, die eine hohe Belastung auf die Brustkappe ausübt, noch sicherer auf dem Stützkörper 11 zu fixieren.

In den dargestellten und bevorzugten Ausführungsformen bildet die Zentrierflanke 20 das freie Ende 26 des Klemmhebels 17, derart, dass die Zentrierflanke 20 bei der Bewegung des Klemmhebels 17 aus der Warteposition in die Klemmposition der Klemmbacke 16 in einem festen Abstand vorauslaufend ist. Das freie Ende 26 kann unterschiedliche Formen und Gestaltungen aufweisen. Dargestellt ist in den Figuren 1 und 2 z.B. eine geschlossene Hakenform. In einer weiteren Ausführungsform gemäß den Figuren 3 und 4 ist die Zentrierflanke 20 in Aufsteckrichtung T betrachtet U-förmig ausgebildet, derart, dass der Haken 15 mindestens in der Warteposition des Klemmhebels 17 zwischen den beiden Schenkeln 27, 28 der U-förmigen Zentrierflanke 20 steht oder bei der Bewegung des Klemmhebels 17 aus der Warteposition in die Klemmposition in die Zentrierflanke 20 eintauchen bzw. durch die Zentrierflanke 20 durchtauchen kann. Das freie Ende 24 des Hakens 15 kann in der Warteposition des Klemmhebels 17 etwa bündig mit der Zentrierflanke 20 abschließen. Vorzugsweise ist das freie Ende 24 des Hakens 15 in der Warteposition des Klemmhebels 17 in Aufsteckrichtung T gegenüber der Zentrierflanke 20 zurückversetzt. In einzelnen Ausführungsformen deckt die Zentrierflanke 20 das freie Ende 24 des Hakens 15 mindestens in der Warteposition des Klemmhebels 17 mindestens teilweise frontal ab, nämlich in Aufsteckrichtung T. In anderen Ausführungsformen deckt die Zentrierflanke 20 das freie Ende 24 des Hakens 15 mindestens in der Warteposition des Klemmhebels 17 mindestens teilweise seitlich ab, nämlich parallel zur Aufsteckrichtung T.

In einer nur schematisch dargestellten und bevorzugten Weiterbildung der Haltevorrichtung 10 ist der Klemmhebel 17 mit einem in der Klemmposition selbsthemmenden Verriegelungsmechanismus, beispielsweise in Form eines Kniehebelmechanismus, verbunden. Anders ausgedrückt ist dem Klemmhebel 17 ein Verriegelungsmechanismus zugeordnet, z.B. die Feder 21. Dieser ist z.B. mittels des Betätigungsmittels 23 im Zusammenwirken mit einem Kurventrieb oder dergleichen zu lösen, um den Klemmhebel 17 aus der Klemmposition wieder zurück in die Warteposition zu bringen.

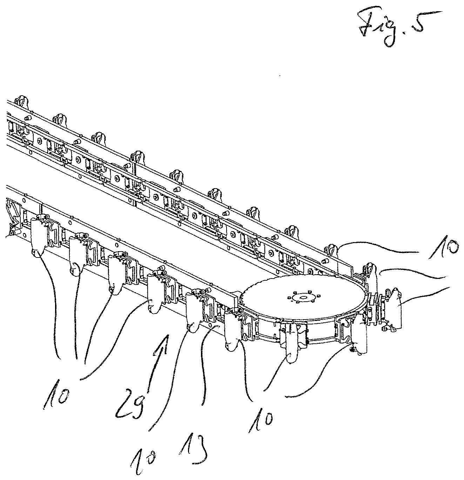

Die Haltevorrichtung 10 kann als Einzelteil, Nachrüstsatz oder Austauschteil ausgebildet sein. Üblicherweise sind solche Haltevorrichtungen 10 jedoch Bestandteil einer Transportvorrichtung 29. Transportvorrichtungen 29 sind zum Transportieren von Brustkappen oder anderen Geflügelteilen ausgebildet und eingerichtet und umfassen eine (mittels nicht explizit dargestelltem Antrieb) umlaufend angetriebene Transporteinheit 13 sowie mindestens eine daran befestigte Haltevorrichtung 10, die zum Halten der entweideten Geflügelkörper oder Teilen davon während der Verarbeitung in einer Vorrichtung zur Verarbeitung von entweideten Geflügelkörpern oder Teilen davon ausgebildet und eingerichtet ist. Üblicherweise ist jedoch eine Vielzahl der Haltevorrichtungen 10 an der Transporteinheit 13 befestigt (siehe insbesondere Figur 5). Bevorzugt ist die oder jede Haltevorrichtung 10 nach einem oder mehreren der Ansprüche 1 bis 12 ausgebildet und eingerichtet und damit gemäß der vorstehenden Beschreibung. Die Transporteinheit 13 ist bevorzugt eine Transportkette, an der die Haltevorrichtungen 10 über ihre Befestigungsmittel 22 lösbar befestigt sind. Solche Transportvorrichtungen 29 nach Anspruch 13, wie sie vorstehend beschrieben sind, sind bevorzugt in einer Vorrichtung zur Verarbeitung von entweideten Geflügelkörpern oder Teilen davon angeordnet.

Diese Vorrichtungen sind zur Verarbeitung von entweideten Geflügelkörpern oder Teilen davon ausgebildet und eingerichtet und umfassen mindestens eine Bearbeitungsstation zum Bearbeiten der Geflügelkörper oder Teilen davon sowie eine Transportvorrichtung 29 zum Transportieren der Geflügelkörper oder Teilen davon entlang der oder jeder Bearbeitungsstation, wobei die Transportvorrichtung 29 nach Anspruch 13 ausgebildet und eingerichtet ist, wie vorstehend beschrieben. Als Bearbeitungsstation ist insbesondere ein Messeraggregat vorgesehen, das zwei beabstandet zueinander angeordnete Kreismesser umfasst, die zum Freischneiden des Brustbeins ausgebildet und eingerichtet sind.

Im Folgenden wird das erfindungsgemäße Verfahren anhand der Zeichnung näher beschrieben.

Das Verfahren beschreibt das Aufsatteln eines entweideten Geflügelkörpers oder eines Teils davon auf eine Haltevorrichtung 10 nach einem oder mehreren der Ansprüche 1 bis 12. Das Aufsatteln von Geflügelkörpern oder Teilen davon wird am Beispiel einer Brustkappe als Teil eines Geflügelkörpers beschrieben. Zunächst wird das Geflügelkörperteil auf einen Stützkörper 11 der Haltevorrichtung 10 aufgesteckt. Das Aufstecken kann automatisiert erfolgen. Bevorzugt ist jedoch eine manuelle Bestückung der Haltevorrichtung 10 durch eine Bedienperson. Das Geflügelkörperteil wird dazu mit einer vorzugsweise ziehenden Bewegung über den Stützkörper 11 gestülpt. Dabei wird das Geflügelkörperteil beim Aufstecken mit zu klemmenden Teilen des Geflügelkörperteils, z.B. einem Knorpel- oder Knochenbestandteil, am Beispiel der Brustkappe mit einer in einen zwischen dem Stützkörper 11 und einem Haken 15 einer Klemmeinrichtung 14 gebildeten Freiraum 19 gebracht, während der feststehende Haken 15 in Weichteile des Geflügelkörperteils eindringt. Um das Geflügelkörperteil zu fixieren, wird ein Klemmhebel 17 der Klemmeinrichtung 14 aus einer Warteposition in eine Klemmposition bewegt, in der eine Klemmbacke 16 des Klemmhebels 17 das Geflügelkörperteil bzw. die zu klemmenden Teile zwischen sich und dem Haken 15 fixiert.

Dieses Verfahren zeichnet sich erfindungsgemäß dadurch aus, dass das Geflügelkörperteil mittels einer Zentrierflanke 20 des Klemmhebels 17 auf dem Stützkörper 11 zentriert wird, bevor der Haken 15 in die Weichteile eindringt, indem Rabenbeine mit ihren einander zugekehrten Innenseiten die Zentrierflanke 20 in ihre Mitte nehmen, bis eine die sich im Verbindungsbereich der beiden Rabenbeine befindet, gegen die Zentrierflanke 20 stößt und diese bei einer fortgesetzten Aufsteckbewegung mitnimmt. Es erfolgt also vor dem vollständigen oder partiellen Eindringen des Hakens 15 eine bedienerunabhängige Zentrierung des Geflügelkörperteils auf dem Stützkörper 11.

In gleicher Weise lassen sich auch ganze/vollständige, entweidete Geflügelkörper oder andere Teile als die Brustkappe auf die Haltevorrichtung 10 aufsatteln. Entscheidend ist, dass der Geflügelkörper oder das Teil davon Knorpel- und/oder Knochenbestandteile aufweist, die mit der Zentrierflanke in Kontakt kommen. Vorzugsweise ist das Verfahren zum Aufsatteln von Brustkappen als Teil des Geflügelkörpers ausgebildet und eingerichtet, wobei die Brustkappe beim Aufstecken in Aufsteckrichtung T auf den Stützkörper 11 zunächst mit Knochenbestandteilen, vorzugsweise mit der zwischen den Rabenbeinen im Bereich des Brustbeins angeordneten auf die Zentrierflanke 20 trifft und dadurch zentriert wird, und beim fortgesetzten Aufstecken der Haken 15 vollständig in die Weichteile der Brustkappe dringt und parallel der Klemmhebel 17 aus der Warteposition in die Klemmposition zum Fixieren der Brustkappe geschwenkt wird.

Vorteilhafterweise wird der Klemmhebel 17 ausschließlich produktgesteuert aus der Warteposition in die Klemmposition geschwenkt, wobei das Schwenken des Klemmhebels 17 aus der Warteposition erst dann durch die Brustkappe ausgelöst wird, nachdem die Brustkappe durch einen Kontakt von Knochenbestandteilen mit der Zentrierflanke 20 in eine symmetrische Position gebracht wurde.

Erfindungsgemäss wird das Verfahren mit einer zuvor beschriebenen Vorrichtung zur Verarbeitung von entweideten Geflügelkörpern oder Teilen davon ausgeführt.

## Patentansprüche

1. Haltevorrichtung (10), ausgebildet und eingerichtet zum Halten von einem entweideten Geflügelkörper oder einem Teil davon, insbesondere von einer Brustkappe, während der Verarbeitung in einer Vorrichtung zur Verarbeitung von entweideten Geflügelkörpern oder Teilen davon, umfassend einen Stützkörper (11), ausgebildet und eingerichtet zum Stützen des Geflügelkörpers oder des Teils davon, einen Befestigungskörper (12), ausgebildet und eingerichtet zum Halten des Stützkörpers (11) einerseits und zum Befestigen der Haltevorrichtung (10) an einer umlaufend angetriebenen Transporteinheit (13) der Vorrichtung zur Verarbeitung von entweideten Geflügelkörpern oder Teilen davon andererseits, sowie eine Klemmeinrichtung (14), die zum Fixieren des Geflügelkörpers oder des Teils davon auf dem Stützkörper (11) während der Verarbeitung ausgebildet und eingerichtet ist, wobei die Klemmeinrichtung (14) einen Haken (15), der zum Eindringen in Weichteile des Geflügelkörpers oder des Teils davon ausgebildet und eingerichtet ist, sowie einen eine Klemmbacke (16) aufweisenden Klemmhebel (17), der zum Klemmen von Teilen des Geflügelkörpers oder des Teils davon gegen die dem Stützkörper (11) zugewandte Unterseite (18) des Hakens (15) ausgebildet und eingerichtet ist, umfasst, wobei der Haken (15) zur Bildung eines Freiraums (19) für die Aufnahme der zu klemmenden Teile des Geflügelkörpers oder einem Teil davon mit seiner Unterseite (18) beabstandet zum Stützkörper (11) angeordnet und der Klemmhebel (17) gegen eine Federkraft aus einer Warteposition in eine Klemmposition und zurück bewegbar ausgebildet ist, **dadurch gekennzeichnet, dass** der Klemmhebel (17) zusätzlich zur Klemmbacke (16) eine Zentrierflanke (20) aufweist, die in der Warteposition des Klemmhebels (17) in den Freiraum (19) zwischen der Unterseite (18) des Hakens (15) und dem Stützkörper (11) hineinragt.

2. Haltevorrichtung (10) nach Anspruch 1, **dadurch gekennzeichnet, dass** die Haltevorrichtung (10) für eine Aufsteckrichtung T des Geflügelkörpers oder des Teils davon auf den Stützkörper (11) ausgebildet und eingerichtet ist, die sich parallel zur Symmetrieebene E des Stützkörpers (11) erstreckt und einem freien Ende (24) des Hakens (15) entgegengerichtet ist.

3. Haltevorrichtung (10) nach Anspruch 1 oder 2, **dadurch gekennzeichnet, dass** sich die Zentrierflanke (20) in der Warteposition des Klemmhebels (17) bis in den Bereich nahe der dem Stützkörper (11) zugewandten Unterseite (18) des Hakens (15) erstreckt.

4. Haltevorrichtung (10) nach Anspruch 2 oder 3, **dadurch gekennzeichnet, dass** sich die Zentrierflanke (20) quer zur Aufsteckrichtung T über einen Teil der Breite des Stützkörpers (11) erstreckt.

5. Haltevorrichtung (10) nach einem oder mehreren der Ansprüche 2 bis 4, **dadurch gekennzeichnet, dass** die Zentrierflanke (20) quer zur Aufsteckrichtung T breiter ausgebildet ist als das freie Ende (24) des Hakens (15).

6. Haltevorrichtung (10) nach einem oder mehreren der Ansprühe 2 bis 5, **dadurch gekennzeichnet, dass** sich die Zentrierflanke (20) in der Warteposition des Klemmhebels (17) in Aufsteckrichtung T des Geflügelkörpers oder des Teils davon auf den Stützkörper (11) mindestens auf gleicher Höhe zum freien Ende (24) des Hakens (15), vorzugsweise jedoch vor dem freien Ende (24) des Hakens (15) befindet.

7. Haltevorrichtung (10) nach einem oder mehreren der Ansprüche 1 bis 6, **dadurch gekennzeichnet, dass** sich die Klemmbacke (16) des Klemmhebels (17) in der Warteposition des Klemmhebels (17) in einer zurückgezogenen Position innerhalb des Stützkörpers (11) befindet und die Zentrierflanke (20) des Klemmhebels (17) in der Warteposition des Klemmhebels (17) über den Stützkörper (11) hinausragt, während die Klemmbacke (16) des Klemmhebels (17) in der Klemmposition des Klemmhebels (17) über den Stützkörper (11) hinausragt und sich die Zentrierflanke (20) des Klemmhebels (17) in der Klemmposition des Klemmhebels (17) in einer zurückgezogenen Position innerhalb des Stützkörpers (11) befindet.

8. Haltevorrichtung (10) nach einem oder mehreren der Ansprüche 1 bis 7, **dadurch gekennzeichnet, dass** die Zentrierflanke (20) einstückig mit dem Klemmhebel (17) verbunden ist, wobei der Klemmhebel (17) über die Zentrierflanke (20) produktgesteuert aus der Warteposition in die Klemmposition bewegbar ist.

9. Haltevorrichtung (10) nach einem oder mehreren der Ansprüche 1 bis 8, **dadurch gekennzeichnet, dass** die Zentrierflanke (20) das freie Ende des Klemmhebels (17) bildet, derart, dass die Zentrierflanke (20) bei der Bewegung des Klemmhebels (17) aus der Warteposition in die Klemmposition der Klemmbacke (16) in einem festen Abstand vorauslaufend ist.

10. Haltevorrichtung (10) nach einem oder mehreren der Ansprüche 2 bis 9, **dadurch gekennzeichnet, dass** die Zentrierflanke (20) das freie Ende (24) des Hakens (15) mindestens in der Warteposition des Klemmhebels (17) frontal, nämlich in Aufsteckrichtung T, oder seitlich, nämlich parallel zur Aufsteckrichtung T, mindestens teilweise abdeckt.

11. Haltevorrichtung (10) nach einem oder mehreren der Ansprüche 2 bis 10, **dadurch gekennzeichnet, dass** die Zentrierflanke (20) in Aufsteckrichtung T betrachtet U-förmig ausgebildet ist, derart, dass der Haken (15) mindestens in der Warteposition des Klemmhebels (17) zwischen den beiden Schenkeln (27, 28) der U-förmigen Zentrierflanke (20) steht oder bei der Bewegung des Klemmhebels (17) aus der Warteposition in die Klemmposition in die Zentrierflanke (20) eintauchen bzw. durch die Zentrierflanke (20) durchtauchen kann.

12. Haltevorrichtung (10) nach einem oder mehreren der Ansprüche 1 bis 11, **dadurch gekennzeichnet, dass** der Klemmhebel (17) mit einem in der Klemmposition selbsthemmenden Verriegelungsmechanismus verbunden ist.

13. Transportvorrichtung (29), ausgebildet und eingerichtet zum Transportieren von entweideten Geflügelkörpern oder Teilen davon, umfassend eine umlaufend angetriebene Transporteinheit (13) sowie mindestens eine daran befestigte Haltevorrichtung (10), die zum Halten des entweideten Geflügelkörpers oder des Teils davon während der Verarbeitung in einer Vorrichtung zur Verarbeitung von entweideten Geflügelkörpern oder Teilen davon ausgebildet und eingerichtet ist, **dadurch gekennzeichnet, dass** die oder jede Haltevorrichtung (10) nach einem oder mehreren der Ansprüche 1 bis 12 ausgebildet und eingerichtet ist.

14. Verwendung einer Transportvorrichtung (29) nach Anspruch 13 in einer Vorrichtung zur Verarbeitung von entweideten Geflügelkörpern oder Teilen davon.

15. Vorrichtung zur Verarbeitung von entweideten Geflügelkörpern oder Teilen davon, umfassend mindestens eine Bearbeitungsstation zum Bearbeiten der Geflügelkörper oder Teilen davon sowie eine Transportvorrichtung (29) zum Transportieren der Geflügelkörper oder Teilen davon entlang der oder jeder Bearbeitungsstation, **dadurch gekennzeichnet, dass** die Transportvorrichtung (29) nach Anspruch 13 ausgebildet und eingerichtet ist.

16. Verfahren zum Aufsatteln eines entweideten Geflügelkörpers oder eines Teils davon auf eine Haltevorrichtung (10) nach einem oder mehreren der Ansprüche 1 bis 12, umfassend die Schritte,
- Aufstecken des Geflügelkörpers oder eines Teils davon auf einen Stützkörper (11) der Haltevorrichtung (10),
- wobei der Geflügelkörper oder das Teil davon beim Aufstecken mit zu klemmenden Teilen des Geflügelkörpers oder des Teils davon in einen zwischen dem Stützkörper (11) und einem Haken (15) einer Klemmeinrichtung (14) gebildeten Freiraum (19) gebracht wird, während der Haken (15) in Weichteile des Geflügelkörpers oder des Teils davon eindringt, und
- Bewegen eines Klemmhebels (17) der Klemmeinrichtung (14) aus einer Warteposition in eine Klemmposition, in der eine Klemmbacke (16) des Klemmhebels (17) den Geflügelkörper oder das Teil davon bzw. die zu klemmenden Teile zwischen sich und dem Haken (15) fixiert,
**dadurch gekennzeichnet, dass** der Geflügelkörper oder das Teil davon mittels einer Zentrierflanke (20) des Klemmhebels (17) auf dem Stützkörper (11) zentriert wird, bevor der Haken (15) in die Weichteile eindringt, indem Rabenbeine mit ihren einander zugekehrten Innenseiten die Zentrierflanke (20) in ihre Mitte nehmen, bis eine die sich im Verbindungsbereich der beiden Rabenbeine befindet, gegen die Zentrierplatte (20) stößt und diese bei einer fortgesetzten Aufsteckbewegung mitnimmt.

17. Verfahren nach Anspruch 16, **dadurch gekennzeichnet, dass** es zum Aufsatteln von Brustkappen als Teil des Geflügelkörpers ausgebildet und eingerichtet ist, wobei die Brustkappe beim Aufstecken in Aufsteckrichtung T auf den Stützkörper (11) zunächst mit Knochenbestandteilen auf die Zentrierflanke (20) trifft und dadurch zentriert wird, und beim fortgesetzten Aufstecken der Haken (15) vollständig in die Weichteile dringt und parallel der 16. Klemmhebel (17) aus der Warteposition in die Klemmposition zum Fixieren der Brustkappe geschwenkt wird.

18. Verfahren nach Anspruch 17, **dadurch gekennzeichnet, dass** der Klemmhebel (17) ausschließlich produktgesteuert aus der Warteposition in die Klemmposition geschwenkt wird, wobei das Schwenken des Klemmhebels (17) aus der Warteposition erst dann durch die Brustkappe ausgelöst wird, nachdem die Brustkappe durch einen Kontakt von Knochenbestandteilen mit der Zentrierflanke (20) in eine symmetrische Position gebracht wurde.

## Claims

1. Holding apparatus (10) which is configured and adapted for holding a gutted poultry body or a part thereof, in particular a breast cap, during processing in an apparatus for processing gutted poultry bodies or parts thereof, the holding apparatus comprising a support body (11) which is configured and adapted for supporting the poultry body or the part thereof, a fastening body (12) which is configured and adapted for holding the support body (11) on the one hand and for fastening the holding apparatus (10) to a circulatingly driven transport unit (13) of the apparatus for processing gutted poultry bodies or parts thereof on the other hand, and a clamping device (14) which is configured and adapted for securing the poultry body or the part thereof to the support body (11) during processing, wherein the clamping device (14) comprises a hook (15) which is configured and adapted for penetrating into soft parts of the poultry body or the part thereof and a clamping lever (17), comprising clamping jaws (16), which is configured and adapted for clamping parts of the poultry body or the part thereof against the lower side (18) of the hook (15) directed towards the support body (11), wherein the hook (15) is arranged such that its lower side (18) is spaced apart from the support body (11) in order to form a free space (19) for receiving the parts of the poultry body or a part thereof to be clamped, and the clamping lever (17) is designed so as to be movable, counter to a spring force, out of a standby position into a clamping position, and back again, **characterised in that** in addition to clamping jaws (16), the clamping lever (17) comprises a centring shoulder (20) which projects into the free space (19) between the lower side (18) of the hook (15) and the support body (11) when the clamping lever (17) is in the standby position.

2. Holding apparatus (10) according to claim 1, **characterised in that** the holding apparatus (10) is configured and adapted for a mounting direction T of the poultry body or the part thereof onto the support body (11), which extends parallel to the plane of symmetry E of the support body (11) and is directed contrary to a free end (24) of the hook (15).

3. Holding apparatus (10) according to claim 1 or 2, **characterised in that** the centring shoulder (20) extends into the region close to the lower side (18) of the hook (15) directed towards the support body (11) when the clamping lever (17) is in the standby position.

4. Holding apparatus (10) according to claim 2 or 3, **characterised in that**, transverse to the mounting direction T, the centring shoulder (20) extends over part of the width of the support body (11).

5. Holding apparatus (10) according to one or more of claims 2 to 4, **characterised in that**, transverse to the mounting direction T, the centring shoulder (20) is designed to be wider than the free end (24) of the hook (15).

6. Holding apparatus (10) according to one or more of claims 2 to 5, **characterised in that**, the centring shoulder (20) is located at least on the same level as the free end (24) of the hook (15), but preferably in front of the free end (24) of the hook (15), when the clamping lever (17) is in the standby position in mounting direction T of the poultry body or the part thereof onto the support body (11).

7. Holding apparatus (10) according to one or more of claims 1 to 6, **characterised in that**, in the standby position of the clamping lever (17), the clamping jaw (16) of the clamping lever (17) is in a retracted position inside the support body (11) and, in the standby position of the clamping lever (17), the centring shoulder (20) of the clamping lever (17) projects beyond the support body (11), while, in the clamping position of the clamping lever (17), the clamping jaw (16) of the clamping lever (17) projects beyond the support body (11) and, in the clamping position of the clamping lever (17), the centring shoulder (20) of the clamping lever (17) is in a retracted position inside the support body (11).

8. Holding apparatus (10) according to one or more of claims 1 to 7, **characterised in that** the centring shoulder (20) is integrally joined to the clamping lever (17), wherein the clamping lever (17) is movable out of the standby position into the clamping position via the centring shoulder (20) controlled by the product.

9. Holding apparatus (10) according to one or more of claims 1 to 8, **characterised in that** the centring shoulder (20) forms the free end of the clamping lever (17) in such a manner that the centring shoulder (20) precedes at a fixed distance when the clamping lever (17) moves out of the standby position into the clamping position of the clamping jaw (16).

10. Holding apparatus (10) according to one or more of claims 2 to 9, **characterised in that** the centring shoulder (20) at least partially covers the free end (24) of the hook (15) frontally, at least when the clamping lever (17) is in the standby position, namely in mounting direction T, or laterally, namely parallel to the mounting direction T.

11. Holding apparatus (10) according to one or more of claims 2 to 10, **characterised in that** the centring shoulder (20), viewed in mounting direction T, is U-shaped in such a manner that, at least in the standby position of the clamping lever (17), the hook (15) is located between the two limbs (27, 28) of the U-shaped centring shoulder (20) or, when the clamping lever (17) moves out of the standby position into the clamping position, can insert into the centring shoulder (20) or insert through the centring shoulder (20).

12. Holding apparatus (10) according to one or more of claims 1 to 11, **characterised in that** the clamping lever (17) is connected to a locking mechanism which is selflocking in the clamping position.

13. Transport apparatus (29), configured and adapted for transporting gutted poultry bodies or parts thereof, comprising a circulatingly driven transport unit (13) and at least one holding apparatus (10) fastened thereto, which is configured and adapted for holding the gutted poultry body or the part thereof during processing in an apparatus for processing gutted poultry bodies or parts thereof, **characterised in that** the or each holding apparatus (10) is configured and adapted according to one or more of claims 1 to 12.

14. Use of a transport apparatus (29) according to claim 13 in an apparatus for processing gutted poultry bodies or parts thereof.

15. Apparatus for processing gutted poultry bodies or parts thereof, comprising at least one processing station for processing the poultry bodies or parts thereof as well as a transport apparatus (29) for transporting the poultry bodies or parts thereof along the or each processing station, **characterised in that** the transport apparatus (29) is configured and adapted according to claim 13.

16. Method for saddle-mounting a gutted poultry body or a part thereof onto a holding apparatus (10) according to one or more of claims 1 to 12, comprising the steps,
- Mounting the poultry body or a part thereof onto a support body (11) of the holding apparatus (10),
- wherein the poultry body or the part thereof, when being mounted with parts of the poultry body or the part thereof to be clamped, is brought into a free space (19) formed between the support body (11) and a hook (15) of a clamping device (14), while the hook (15) penetrates soft parts of the poultry body or the part thereof, and
- Moving a clamping lever (17) of the clamping device (14) out of a standby position into a clamping position in which a clamping jaw (16) of the clamping lever (17) secures the poultry body or the part thereof or the parts to be clamped respectively between itself and the hook (15),
**characterised in that** the poultry body or the part thereof is centred on the support body (11) by means of a centring shoulder (20) of the clamping lever (17), before the hook (15) penetrates the soft parts, **in that** coracoid bones take the centring shoulder into their midpoint with the inner sides of the coracoid bones opposite each other until a breast plate, which is located in the region where the two coracoid bones join, strikes against the centring shoulder and takes it along during a continued mounting movement.

17. Method according to claim 16, **characterised in that** it is configured and adapted for saddle-mounting of breast caps as part of the poultry body, wherein the breast cap, when mounting onto the support body (11) in mounting direction T, first hits the centring shoulder (20) with bone components and is thereby centred and, as mounting continues, the hook (15) completely penetrates the soft parts and at the same time the clamping lever (17) is pivoted out of the standby position into the clamping position to secure the breast cap.

18. Method according to claim 17, **characterised in that** the clamping lever (17) is pivoted from the standby position into the clamping position controlled exclusively by the product, wherein pivoting of the clamping lever (17) out of the standby position is only initiated by the breast cap once the breast cap has been brought into a symmetrical position due to a contact of bone components with the centring shoulder (20).

## Revendications

1. Dispositif de maintien (10), configuré et adapté pour maintenir une carcasse de volaille éviscérée ou une partie de celle-ci, en particulier un plastron, pendant le traitement dans un dispositif de traitement de carcasses de volaille éviscérées ou de parties de celle-ci, comprenant un corps de support (11), configuré et adapté pour soutenir la carcasse de volaille ou la partie de celle-ci, un corps de fixation (12), configuré et adapté pour maintenir le corps de support (11) d'une part et pour fixer le dispositif de maintien (10) à une unité de transport (13) entraînée en circulation du dispositif de traitement de carcasses de volailles éviscérées ou de parties de celles-ci d'autre part, ainsi qu'un dispositif de serrage (14), qui est configuré et adapté pour fixer la carcasse de volaille ou la partie de celle-ci sur le corps de support (11) pendant le traitement, le dispositif de serrage (14) comportant un crochet (15), qui est configuré et adapté pour pénétrer dans des parties molles de la carcasse de volaille ou de la partie de celle-ci, ainsi qu'un levier de serrage (17) présentant une mâchoire de serrage (16), qui est configuré et adapté pour serrer des parties de la carcasse de volaille ou de la partie de celle-ci contre le côté inférieur (18) du crochet (15) tourné vers le corps de support (11), le crochet (15) étant agencé avec son côté inférieur (18) à distance du corps de support (11) pour former un espace libre (19) pour recevoir les parties à serrer de la carcasse de volaille ou d'une partie de celle-ci, et le levier de serrage (17) étant configuré de manière à pouvoir être déplacé à l'encontre d'une force de ressort d'une position d'attente à une position de serrage et inversement, **caractérisé en ce que** le levier de serrage (17) présente, en plus de la mâchoire de serrage (16), un flanc de centrage (20) qui, dans la position d'attente du levier de serrage (17), pénètre dans l'espace libre (19) entre le côté inférieur (18) du crochet (15) et le corps de support (11).

2. Dispositif de maintien (10) selon la revendication 1, **caractérisé en ce que** le dispositif de maintien (10) est configuré et adapté pour une direction d'emboîtement T de la carcasse de volaille ou de la partie de celle-ci sur le corps de support (11), qui s'étend parallèlement au plan de symétrie E du corps de support (11) et qui est opposée à une extrémité libre (24) du crochet (15).

3. Dispositif de maintien (10) selon la revendication 1 ou 2, **caractérisé en ce que** le flanc de centrage (20) s'étend, dans la position d'attente du levier de serrage (17), jusque dans la zone proche du côté inférieur (18) du crochet (15) tourné vers le corps de support (11).

4. Dispositif de maintien (10) selon la revendication 2 ou 3, **caractérisé en ce que** le flanc de centrage (20) s'étend transversalement à la direction d'emboîtement T sur une partie de la largeur du corps de support (11).

5. Dispositif de maintien (10) selon une ou plusieurs des revendications 2 à 4, **caractérisé en ce que**, transversalement à la direction d'emboîtement T, le flanc de centrage (20) est configuré plus large que l'extrémité libre (24) du crochet (15).

6. Dispositif de maintien (10) selon une ou plusieurs des revendications 2 à 5, **caractérisé en ce que** le flanc de centrage (20) se trouve, dans la position d'attente du levier de serrage (17), dans la direction d'emboîtement T de la carcasse de volaille ou de la partie de celle-ci sur le corps de support (11), au moins à la même hauteur que l'extrémité libre (24) du crochet (15), de préférence toutefois avant l'extrémité libre (24) du crochet (15).

7. Dispositif de maintien (10) selon une ou plusieurs des revendications 1 à 6, **caractérisé en ce que** la mâchoire de serrage (16) du levier de serrage (17) se trouve dans une position rétractée à l'intérieur du corps de support (11) dans la position d'attente du levier de serrage (17) et le flanc de centrage (20) du levier de serrage (17) dépasse du corps de support (11) dans la position d'attente du levier de serrage (17), tandis que la mâchoire de serrage (16) du levier de serrage (17) dépasse du corps de support (11) dans la position de serrage du levier de serrage (17) et que le flanc de centrage (20) du levier de serrage (17) se trouve dans une position rétractée à l'intérieur du corps de support (11) dans la position de serrage du levier de serrage (17).

8. Dispositif de maintien (10) selon une ou plusieurs des revendications 1 à 7, **caractérisé en ce que** le flanc de centrage (20) est relié d'un seul tenant au levier de serrage (17), le levier de serrage (17) pouvant être déplacé de la position d'attente à la position de serrage par l'intermédiaire du flanc de centrage (20) sous la commande du produit.

9. Dispositif de maintien (10) selon une ou plusieurs des revendications 1 à 8, **caractérisé en ce que** le flanc de centrage (20) forme l'extrémité libre du levier de serrage (17), de telle sorte que le flanc de centrage (20) précède la mâchoire de serrage (16) d'une distance fixe lors du déplacement du levier de serrage (17) de la position d'attente à la position de serrage.

10. Dispositif de maintien (10) selon une ou plusieurs des revendications 2 à 9, **caractérisé en ce que** le flanc de centrage (20) recouvre au moins partiellement l'extrémité libre (24) du crochet (15) au moins dans la position d'attente du levier de serrage (17), frontalement, à savoir dans la direction d'emboîtement T, ou latéralement, à savoir parallèlement à la direction d'emboîtement T.

11. Dispositif de maintien (10) selon l'une ou plusieurs des revendications 2 à 10, **caractérisé en ce que** le flanc de centrage (20) est configuré en forme de U tel que vu dans la direction d'emboîtement T, de telle sorte que le crochet (15) se trouve entre les deux branches (27, 28) du flanc de centrage (20) en forme de U au moins dans la position d'attente du levier de serrage (17) ou, lors du déplacement du levier de serrage (17) de la position d'attente à la position de serrage, pénètre dans le flanc de centrage (20) ou peut traverser le flanc de centrage (20).

12. Dispositif de maintien (10) selon une ou plusieurs des revendications 1 à 11, **caractérisé en ce que** le levier de serrage (17) est relié à un mécanisme de verrouillage autobloquant dans la position de serrage.

13. Dispositif de transport (29), configuré et adapté pour transporter des carcasses de volailles éviscérées ou des parties de celles-ci, comprenant une unité de transport (13) entraînée en circulation, ainsi qu'au moins un dispositif de maintien (10) fixé à celle-ci, qui est configuré et adapté pour maintenir la carcasse de volaille éviscérée ou la partie de celle-ci pendant le traitement dans un dispositif de traitement de carcasses de volailles éviscérées ou de parties de celles-ci, **caractérisé en ce que** le ou chaque dispositif de maintien (10) est configuré et adapté selon une ou plusieurs des revendications 1 à 12.

14. Utilisation d'un dispositif de transport (29) selon la revendication 13 dans un dispositif de traitement de carcasses de volailles éviscérées ou de parties de celles-ci.

15. Dispositif de traitement de carcasses de volailles éviscérées ou de parties de celles-ci, comprenant au moins une station de traitement pour traiter les carcasses de volailles ou des parties de celles-ci, ainsi qu'un dispositif de transport (29) pour transporter les carcasses de volailles ou des parties de celles-ci le long de la ou de chaque station de traitement, **caractérisé en ce que** le dispositif de transport (29) est configuré et adapté selon la revendication 13.

16. Procédé d'installation d'une carcasse de volaille éviscérée ou d'une partie de celle-ci sur un dispositif de maintien (10) selon une ou plusieurs des revendications 1 à 12, comprenant les étapes suivantes :
- l'emboîtement de la carcasse de volaille ou d'une partie de celle-ci sur un corps de support (11) du dispositif de maintien (10),
- la carcasse de volaille ou la partie de celle-ci étant amenée, lors de l'emboîtement, avec des parties de la carcasse de volaille ou de la partie de celle-ci à serrer, dans un espace libre (19) formé entre le corps de support (11) et un crochet (15) d'un dispositif de serrage (14), tandis que le crochet (15) pénètre dans des parties molles de la carcasse de volaille ou de la partie de celle-ci, et
- le déplacement d'un levier de serrage (17) du dispositif de serrage (14) d'une position d'attente à une position de serrage, dans laquelle une mâchoire de serrage (16) du levier de serrage (17) fixe la carcasse de volaille ou la partie de celle-ci ou les parties à serrer entre lui-même et le crochet (15),
**caractérisé en ce que** la carcasse de volaille ou la partie de celle-ci est centrée sur le corps de support (11) au moyen d'un flanc de centrage (20) du levier de serrage (17) avant que le crochet (15) ne pénètre dans les parties molles, par le fait que des coracoïdes prennent le flanc de centrage (20) en leur milieu avec leurs côtés intérieurs tournés l'une vers l'autre, jusqu'à ce qu'une plaque de poitrine, qui se trouve dans la zone de liaison des deux coracoïdes, vienne buter contre la plaque de centrage (20) et entraîne celle-ci lors de la poursuite d'un mouvement d'emboîtement.

17. Procédé selon la revendication 16, **caractérisé en ce qu'**il est configuré et adapté pour l'installation de plastrons en tant que partie de la carcasse de volaille, le plastron rencontrant d'abord le flanc de centrage (20) avec des composants osseux lors de l'emboîtement dans la direction d'emboîtement T sur le corps de support (11) et étant ainsi centré, et le crochet (15) pénétrant complètement dans les parties molles lors de la poursuite de l'emboîtement et le levier de serrage (17) étant pivoté parallèlement de la position d'attente dans la position de serrage pour fixer le plastron.

18. Procédé selon la revendication 17, **caractérisé en ce que** le levier de serrage (17) est pivoté de la position d'attente à la position de serrage exclusivement sous la commande du produit, le pivotement du levier de serrage (17) à partir de la position d'attente n'étant déclenché par le plastron qu'après que le plastron a été amené dans une position symétrique par un contact de composants osseux avec le flanc de centrage (20).
